# EUROPÄISCHE PATENTSCHRIFT

(11) **EP 1 795 460 B1**
(45) Veröffentlichungstag und Bekanntmachung des Hinweises auf die Patenterteilung: **10.06.2009**
(21) Anmeldenummer: 06007936.5
(22) Anmeldetag: 15.04.2006
(51) Int. Cl.: B65D 81/00, A47J 31/06

(54) **Pad für die Zubereitung von Getränken wie Kaffee oder dergleichen, sowie Halter für ein solches Pad**
Pad for the preparation of beverages as coffee or the like, and holder for such a pad
Capsule pour la préparation de boissons comme café ou autre article similaire, et support pour une telle capsule

(30) Priorität: 07.12.2005 DE 202005019207 U
(43) Veröffentlichungstag der Anmeldung: 13.06.2007
(73) Patentinhaber: Severin Elektrogeräte GmbH, 59846 Sundern (DE)
(72) Erfinder: Gerke, Hans-Josef, 59846 Sundern (DE)
(74) Vertreter: Köchling, Conrad-Joachim

(56) Entgegenhaltungen:
- EP-A- 0 904 717
- CH-A- 495 138
- US-A- 1 951 357
- US-A- 6 068 871

## Beschreibung

Die Erfindung betrifft Pad für die Zubereitung von Getränken wie Kaffee oder dergleichen, mit einem oberseitigen und einem unterseitigen, wasserdurchlässigen Filtermaterial, zum Beispiel einem mikroporösen Filtertuch, und einer zwischen dem Filtermaterial vorgesehenen Schicht aus Kaffeemehl oder dergleichen mit Wasser auslaugbarem Material, wobei die über die Schicht vorragenden Ränder des oberseitigen und unterseitigen Materials miteinander verbunden sind, wobei das Pad oberseitig und/oder unterseitig eine Vertiefung aufweist.

Ein derartiges Pad ist beispielsweise aus der US Patentschrift 6 068 871 bekannt.

Solche Pads sind im Stand der Technik vielfach bekannt und in jüngerer Zeit vielfach in Gebrauch. Üblicherweise weisen solche Pads eine Form einer kreisrunden Scheibe auf. Es sind auch Pads abweichender Grundform bekannt, beispielsweise in Form eines scheibenförmigen Trapezes mit abgerundeten Ecken. Diese Pads sind aus zwei Schichten von Filtermaterial gebildet, wobei zwischen den Schichten das entsprechende Brühmaterial, beispielsweise Kaffeemehl oder dergleichen angeordnet ist. Die Schichten sind umlaufend am Rand miteinander verbunden, so dass das Material, welches zwischen den Schichten eingefasst ist, nicht herausrieseln kann.

Solche Pads bedürfen einer Handhabung. Dazu sind die Pads üblicherweise in Vakuumverpackungen angeordnet, die geöffnet werden, so dass die Pads entnommen werden und in die entsprechenden Aufnahmen oder Halter von Kaffeemaschinen oder dergleichen eingebracht werden können.

Für die Pads gibt es keine Handhabungshilfe, so dass der Benutzer die Pads möglicherweise am Rand anfasst und den Rand beschädigt, wenn er die Pads in die entsprechenden Halter einlegt oder in sonstiger Weise handhabt.

Zur Verwendung derartiger Pads in einer Kaffeemaschine zur Zubereitung von Kaffee ist aus der EP 0 904 717 A1 ein Halter bekannt, der in eine Kaffeemaschine einsetzbar ist oder Bestandteil der Vorrichtung ist, der als flache Schale mit mündungsseitig umlaufenden Auflageflansch ausgebildet ist und in seinem Boden mindestens eine Auslauföffnung für Filtrat aufweist.

Ausgehend von diesem Stand der Technik liegt der Erfindung die Aufgabe zugrunde, Pads gattungsgemäßer Art zu schaffen, die einen zusätzlichen Nutzeffekt aufweisen und insbesondere eine einfachere Handhabung ermöglichen.

Des Weiteren liegt der Erfindung die Aufgabe zugrunde, Halter für solche Pads zu schaffen, die eine komfortable Anwendung der Pads ermöglichen.

Zur Lösung dieser Aufgabe schlägt die Erfindung vor, dass das oberseitige und das unterseitige Filtermaterial im Bereich der Vertiefung unmittelbar miteinander verbunden ist.

Dadurch, dass die Pads oberseitig und/oder unterseitig eine Vertiefung aufweisen, hat der Benutzer einen Anhalt, wo die Pads ergriffen werden können, wenn diese gehandhabt werden müssen. Die Vertiefung hat beispielsweise die Größe einer Fingerkuppe, so dass der Benutzer das Pad im Bereich der Vertiefung erfassen und handhaben kann, ohne dass die Gefahr besteht, dass der Benutzer bei der Handhabung des Pads diese am Rand erfasst und möglicherweise die Randverbindung zwischen den Materialschichten zerstört, so dass das Füllmaterial der Pads herausrieseln könnte.

Dadurch, dass das oberseitige und das unterseitige Filtermaterial im Bereich der Vertiefung unmittelbar miteinander verbunden ist, ist die Handhabungsmöglichkeit für ein solches Pad noch verbessert.

Des Weiteren ist bevorzugt vorgesehen, dass die Vertiefung durch eine Lochung gebildet ist, oder eine Lochung aufweist, wobei das oberseitige und unterseitige Filtermaterial im die Lochung umgebenden Bereich miteinander verbunden ist.

Durch eine solche Lochung ist nicht nur eine Handhabungshilfe gegeben, sondern es ist auch eine Positionierungshilfe gegeben, weil der Benutzer anhand der Lochung die Soll- Positionierung des entsprechenden Pads in einem entsprechenden Halter in einfacher Weise überprüfen und feststellen kann. Um zu vermeiden, dass das Füllmaterial des Pads im Bereich der Lochung herausrieselt, ist das Filtermaterial im die Lochung umgebenden Bereich unmittelbar miteinander dicht verbunden, beispielsweise verpresst oder versiegelt, so dass die Füllmasse des Pads nicht verloren gehen kann.

Bevorzugt ist zudem vorgesehen, dass die Vertiefung durch einen kreisförmigen Bereich gebildet ist, der von dicht aufeinander liegendem oberseitigem und unterseitigem Filtermaterial begrenzt ist, wobei vorzugsweise der kreisförmige Bereich mittig gelocht ist.

Auch kann vorgesehen sein, dass das Pad die Form einer kreisrunden Scheibe aufweist.

Es ist aber auch möglich, dass das Pad die Form einer Scheibe aufweist, die von einer kreisrunden Form abweichende Form, insbesondere ovale Form, polygonale Form, Sternform oder asymmetrische Form besitzt, wobei vorzugsweise bei eckiger Grundform die Außenecken gerundet sind.

Eine besonders bevorzugte Ausgestaltung der Erfindung ist im Anspruch 6 angegeben. Dadurch, dass der entsprechende Halter einen Zentriervorsprung oder einen Zentrierdom aufweist, ist es für den Benutzer möglich, das entsprechende Pad mit der Lochung oder mit der Vertiefung auf den entsprechenden Zentriervorsprung oder Zentrierdom aufzusetzen, so dass hierdurch eine zwangsläufige Ausrichtung des Pads in dem Halter erfolgt. Fehler, die ansonsten beim Auflegen des Pads auf dem Halter entstehen können, sind hierdurch ausgeschlossen oder weitestgehend vermieden.

Um eine Verletzung des Pads beim Auflegen zu verhindern, ist vorgesehen, dass der Zentriervorsprung, insbesondere der Zentrierdom, als stumpfer Zylinder ausgebildet ist.

Alternativ oder zusätzlich kann auch vorgesehen sein, dass das freie Ende des Zentriervorsprungs, insbesondere des Zentrierdoms, gerundet ist oder ballig ausgebildet ist.

Um die Durchlässigkeit des Halters für Filtrat durch den Zentriervorsprung oder den Zentrierdom nicht zu stören, ist vorgesehen, dass der der Zentriervorsprung, insbesondere der Zentrierdom, an einem Stützteil des Halters befestigt oder angeformt ist, welches eine Vertiefung des Halters überdeckt, flüssigkeitsdurchlässig ausgebildet ist und mit Höhenabstand über der Auslauföffnung positioniert und gehalten oder angeordnet ist.

Ein Ausführungsbeispiel der Erfindung ist in der Zeichnung dargestellt und im Folgenden näher beschrieben.

Es zeigt:
- Figur 1: ein erfindungsgemäßes Pad für die Zubereitung von Getränken im Querschnitt gesehen;
- Figur 2: ein in einen Halter eingesetztes Pad im Schnitt gesehen;
- Figur 3: desgleichen in Draufsicht von oben gesehen.

In der Zeichnung ist ein Pad 1 für die Zubereitung von Getränken wie Kaffee oder dergleichen ersichtlich. Das Pad ist gebildet von einem oberseitigen und einen unterseitigen wasserdurchlässigen Filtermaterial, zum Beispiel einem mikroporösen Filtertuch aus Zellulose oder dergleichen, sowie einer zwischen dem Filtermaterial vorgesehenen Schicht aus Kaffeemehl oder dergleichen mit Wasser auslaugbarem Material. Die über die Schicht vorragenden Ränder 2 des oberseitigen und unterseitigen Materials sind miteinander dicht verbunden, beispielsweise verpresst oder verklebt.

Erfindungsgemäß weist das Pad 1 oberseitig und unterseitig eine Vertiefung 3 auf. Das oberseitige und unterseitige Filtermaterial ist im Bereich dieser Vertiefung 3 miteinander unmittelbar verbunden. Im Bereich dieser Vertiefung 3 ist mittig eine Lochung 4 gebildet, wobei das oberseitige und unterseitige Filtermaterial im die Lochung 4 umgebenden Bereich miteinander unmittelbar verbunden ist. Es wird somit durch die Vertiefung 3 ein kreisförmiger Bereich gebildet, der etwa einer Fingerkuppe angepasst ist, und der von dicht aufeinander liegendem oberseitigem und unterseitigem Filtermaterial begrenzt ist, wobei der kreisförmige Bereich mittig gelocht ist. Die Lochung ist kleiner als der Gesamtbereich.

Im Ausführungsbeispiel weist das Pad die Form einer kreisrunden Scheibe auf. Es sind aber beliebige andere Formen des Pads möglich, ohne den Zweck der Erfindung zu beeinträchtigen.

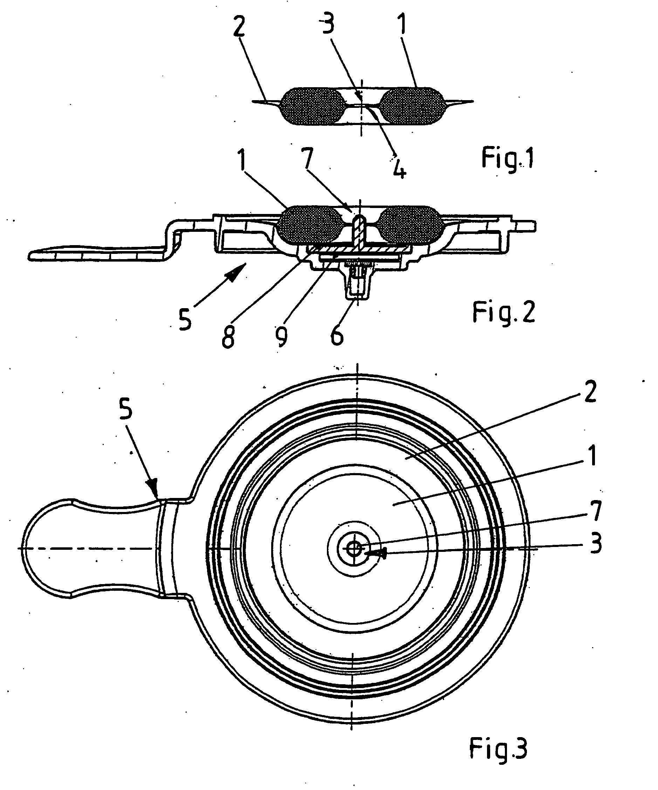

In Figur 2 und 3 ist ein Halter 5 für ein solches mit aufbrühbarem Material gefülltes Pad 1 gezeigt, wobei im Ausführungsbeispiel ein Halter 5 gezeigt ist, der lösbar in die entsprechende Brühkammer einer Kaffeemaschine oder dergleichen einsetzbar ist. Alternativ kann ein solcher Halter natürlich auch integraler Bestandteil der entsprechenden Maschine sein. Der Halter 5 ist als flache Schale mit einem mündungsseitig umlaufenden Auflageflansch ausgebildet, der zur Anlage einer Dichtung der Kaffeemaschine dient, um den Halter nach außen abzudichten. In seinem Boden weist der Halter 5 eine Ablauföffnung 6 für Filtrat auf. Erfindungsgemäß weist der Halter 5 mittig der Aufnahmefläche für das Pad 1 einen Zentriervorsprung oder Zentrierdom 7 auf, der in Richtung auf die Zulaufseite von dem Halter 5 oberseitig abragt und auf den das Pad 1 mit der Vertiefung 3 und insbesondere der Lochung 4 auflegbar und aufgesteckt ist. Der Zentriervorsprung, insbesondere Zentrierdom 7 ist als stumpfer Zylinder ausgebildet, wobei das freie Ende dieses Zentriervorsprungs 7 ballig ausgebildet ist.

Der Zentriervorsprung 7 ist an einem Stützteil 8 des Halters 5 befestigt beziehungsweise angeformt, welches eine Vertiefung 9 des Halters 5 überdeckt. Die Vertiefung ist in unmittelbarer Verbindung mit der Auslauföffnung 6, wobei das Stützteil 8 beispielsweise radial gerichtete Speichen und eine Abdeckung aus einem gitterartigen Material aufweist, so dass das Teil 8 für Flüssigkeit durchlässig ist. Bewusst ist eine Anordnung des Teiles 8 mit Höhenabstand über der Auslauföffnung 6 vorgesehen, um den Abstrom von Filtrat nicht zu behindern.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Pad (1) für die Zubereitung von Getränken wie Kaffee oder dergleichen, mit einem oberseitigen und einem unterseitigen, wasserdurchlässigen Filtermaterial, zum Beispiel einem mikroporösen Filtertuch, und einer zwischen dem Filtermaterial vorgesehenen Schicht aus Kaffeemehl oder dergleichen mit Wasser auslaugbarem Material, wobei die über die Schicht vorragenden Ränder (2) des oberseitigen und unterseitigen Materials miteinander verbunden sind, wobei das Pad (1) oberseitig und/oder unterseitig eine Vertiefung (3) aufweist, **dadurch gekennzeichnet, dass** das oberseitige und das unterseitige Filtermaterial im Bereich der Vertiefung (3) unmittelbar miteinander verbunden ist.

2. Pad nach Anspruch 1, **dadurch gekennzeichnet, dass** die Vertiefung (3) durch eine Lochung (4) gebildet ist, oder eine Lochung (4) aufweist, wobei das oberseitige und unterseitige Filtermaterial im die Lochung (4) umgebenden Bereich miteinander verbunden ist.

3. Pad nach einem der Ansprüche 1 oder 2, **dadurch gekennzeichnet, dass** die Vertiefung (3) durch einen kreisförmigen Bereich gebildet ist, der von dicht aufeinander liegendem oberseitigem und unterseitigem Filtermaterial begrenzt ist, wobei vorzugsweise der kreisförmige Bereich mittig gelocht ist.

4. Pad nach einem der Ansprüche 1 bis 3, **dadurch gekennzeichnet, dass** das Pad (1) die Form einer kreisrunden Scheibe aufweist.

5. Pad nach einem der Ansprüche 1 bis 3, **dadurch gekennzeichnet, dass** das Pad (1) die Form einer Scheibe aufweist, die von einer kreisrunden Form abweichende Form, insbesondere ovale Form, polygonale Form, Sternform oder asymmetrische Form besitzt, wobei vorzugsweise bei eckiger Grundform die Außenecken gerundet sind.

6. Halter (5) für mit aufbrühbarem Material, zum Beispiel Kaffeemehl, gefüllte Pads (1) gemäß einem der Ansprüche 1 bis 5, wobei der Halter (5) in eine Aufbrühvorrichtung, insbesondere Kaffeemaschine, einsetzbar ist oder Bestandteil der Vorrichtung ist, vorzugsweise als flache Schale mit mündungsseitig umlaufendem Auflageflansch ausgebildet ist und in seinem Boden mindestens eine Auslauföffnung (6) für Filtrat aufweist, **dadurch gekennzeichnet, dass** der Halter (5) einen Zentriervorsprung (7) insbesondere einen Zentrierdom, aufweist, der in Richtung der Zulaufseite des Halters (5) abragt und auf den das Pad (1) mit der Vertiefung (3) oder der Lochung (4) zentrisch auflegbar ist.

7. Halter nach Anspruch 6, **dadurch gekennzeichnet, dass** der Zentriervorsprung (7), insbesondere der Zentrierdom, als stumpfer Zylinder ausgebildet ist.

8. Halter nach einem der Ansprüche 6 oder 7, **dadurch gekennzeichnet, dass** das freie Ende des Zentriervorsprungs (7), insbesondere des Zentrierdoms, gerundet ist oder ballig ausgebildet ist.

9. Halter nach einem der Ansprüche 6 bis 8, **dadurch gekennzeichnet, dass** der der Zentriervorsprung (7), insbesondere der Zentrierdom, an einem Stützteil (8) des Halters (5) befestigt oder angeformt ist, welches eine Vertiefung des Halters (5) überdeckt, flüssigkeitsdurchlässig ausgebildet ist und mit Höhenabstand über der Auslauföffnung (6) positioniert und gehalten oder angeordnet ist.

## Claims

1. Pad (1) for preparing beverages such as coffee or the like, comprising a top and a bottom water-permeable filter material, for example a microporous filter cloth, and a layer of ground coffee or other such water-leachable material provided between the filter material, wherein the edges (2) of the top and bottom material protruding beyond the layer are joined to one another, wherein the pad (1) has a depression (3) on the top and/or bottom, **characterised in that** the top filter material and the bottom filter material are joined directly to one another in the region of the depression (3).

2. Pad according to claim 1, **characterised in that** the depression (3) is formed by a perforation (4), or has a perforation (4), wherein the top filter material and the bottom filter material are joined to one another in the region surrounding the perforation (4).

3. Pad according to one of claims 1 or 2, **characterised in that** the depression (3) is formed by a circular region which is delimited by top filter material and bottom filter material lying tightly against one another, wherein preferably the circular region is perforated in the centre.

4. Pad according to one of claims 1 to 3, **characterised in that** the pad (1) has the shape of a circular disc.

5. Pad according to one of claims 1 to 3, **characterised in that** the pad (1) has the shape of a disc which has a shape differing from a circular shape, in particular an oval shape, a polygonal shape, a star shape or an asymmetric shape, wherein preferably the outer corners are rounded in the case of a basic shape with corners.

6. Holder (5) for pads (1) according to one of claims 1 to 5 which are filled with brewable material, for example ground coffee, wherein the holder (5) can be inserted in a brewing device, in particular a coffee machine, or forms part of the device, is preferably designed as a flat dish with a peripheral bearing flange on the mouth side and has in its base at least one outlet opening (6) for filtrate, **characterised in that** the holder (5) has a centring protrusion (7), in particular a centring dome, which protrudes in the direction of the inlet side of the holder (5) and on which there can be centrally placed the pad (1) with the depression (3) or the perforation (4).

7. Holder according to claim 6, **characterised in that** the centring protrusion (7), in particular the centring dome, is designed as a blunt cylinder.

8. Holder according to one of claims 6 or 7, **characterised in that** the free end of the centring protrusion (7), in particular of the centring dome, is rounded or spherical.

9. Holder according to one of claims 6 to 8, **characterised in that** the centring protrusion (7), in particular the centring dome, is fixed to or integrally formed on a support part (8) of the holder (5) which bridges over a depression of the holder (5), is designed to be permeable to liquid and is positioned and held or arranged at a distance in height terms above the outlet opening (6).

## Revendications

1. Capsule (1) pour la préparation de boissons telles que du café ou des substances similaires, comprenant un matériau filtrant perméable à l'eau et placé aux faces supérieure et inférieure, par exemple une étoffe filtrante microporeuse, et une couche de mouture de café ou d'une substance similaire pouvant être extraite par de l'eau, intégrée dans ledit matériau filtrant, les bords (2) dudit matériau situé aux faces supérieure et inférieure, qui font saillie au-delà de ladite couche, étant reliés mutuellement, ladite capsule (1) présentant un renfoncement (3) à sa (ses) face(s) supérieure et/ou inférieure, **caractérisée par le fait que** le matériau filtrant, placé aux faces supérieure et inférieure, est directement solidarisé dans la région dudit renfoncement (3).

2. Capsule selon la revendication 1, **caractérisée par le fait que** le renfoncement (3) est formé d'une perforation (4), ou présente une perforation (4), sachant que le matériau filtrant placé aux faces supérieure et inférieure est solidarisé dans la région entourant ladite perforation (4).

3. Capsule selon l'une des revendications 1 ou 2, **caractérisée par le fait que** le renfoncement (3) est formé d'une région circulaire délimitée par un matériau filtrant en superposition intime, placé aux faces supérieure et inférieure, ladite région circulaire étant de préférence perforée en son centre.

4. Capsule selon l'une des revendications 1 à 3, **caractérisée par le fait que** ladite capsule (1) revêt la forme d'un disque circulaire.

5. Capsule selon l'une des revendications 1 à 3, **caractérisée par le fait que** ladite capsule (1) se présente comme un disque possédant une forme s'écartant d'une forme circulaire, en particulier une forme ovale, une forme polygonale, une configuration en étoile ou une forme asymétrique, les coins extérieurs étant arrondis, de préférence, en présence d'une forme anguleuse.

6. Support (5) destiné à des capsules (1) conformes à l'une des revendications 1 à 5, emplies d'une substance échaudable telle que de la mouture de café, par exemple, ledit support (5) pouvant être inséré dans un dispositif d'échaudage revêtant notamment la forme d'une machine à café, ou faisant partie intégrante dudit dispositif ; étant réalisé, de préférence, sous la forme d'une coque aplatie à collerette de contact s'étendant périphériquement côté embouchure ; et étant muni, dans son fond, d'au moins un orifice (6) d'écoulement de filtrat, **caractérisé par le fait que** ledit support (5) offre une protubérance de centrage (7), notamment un dôme de centrage qui dépasse en direction du côté afflux dudit support (5), et sur laquelle (lequel) la capsule (1) peut être placée centralement par le renfoncement (3) ou par la perforation (4).

7. Support selon la revendication 6, **caractérisé par le fait que** la protubérance de centrage (7), notamment le dôme de centrage, est réalisé(e) sous la forme d'un moignon cylindrique.

8. Support selon l'une des revendications 6 ou 7, **caractérisé par le fait que** l'extrémité libre de la protubérance de centrage (7), notamment du dôme de centrage, est de réalisation arrondie ou de forme massive.

9. Support selon l'une des revendications 6 à 8, **caractérisé par le fait que** la protubérance de centrage (7), notamment le dôme de centrage, est fixé(e) ou ménagé(e) d'un seul tenant sur une pièce d'appui (8) dudit support (5) qui coiffe un renfoncement dudit support (5) ; est de réalisation perméable aux liquides ; et est positionné(e) et retenu(e), ou disposé(e) au-dessus de l'orifice d'écoulement (6), avec espacement en hauteur.
